# EUROPEAN PATENT SPECIFICATION

(11) **EP 1 967 824 B1**
(45) Date of publication and mention of the grant of the patent: **02.10.2019**
(21) Application number: 07004585.1
(22) Date of filing: 06.03.2007
(51) Int. Cl.: G01D 5/14

(54) **Sensor arrangement and measuring method**
Sensoranordnung und Messverfahren
Agencement de capteurs et procédé de mesure

(43) Date of publication of application: 10.09.2008
(73) Proprietor: ams AG, 8141 Premstätten (AT)
(72) Inventor: Urban, Marcel, 8072 Fernitz (AT); Janisch, Josef, 8262 Ilz (AT); Steele, Colin, Edinburgh EH9 2EG (GB); Forsyth, Richard, 8010 Graz (AT)
(74) Representative: Epping - Hermann - Fischer

(56) References cited:
- DE-A1- 19 820 014
- GB-A- 2 344 424
- NL-C2- 1 021 882

## Description

The invention relates to a sensor arrangement and a measuring method.

Sensor arrangements comprising magnetic field sensors for measuring a magnetic field intensity can be used to measure an angular displacement of a magnetic source with respect to the position or orientation of the magnetic field sensors. As a magnetic source, a rotatable diametrically magnetized magnetic source can be employed.

In many cases, the magnetic field sensors are arranged along a circular shape, providing sensor signals that approximately form a sinusoidal curve, depending on a position and on the orientation of the magnetic source. In a conventional magnetic field sensor arrangement, signals of a pair of sensors of opposite position, with respect to the center of the circle, are combined to a first signal vector and evaluated together with a second signal vector of a respective sensor pair being arranged orthogonally to the first sensor pair. The determined signal vectors can be regarded as sine and cosine components of a resulting vector corresponding to the angular direction of the magnetic source. The angle of the resulting vector can be derived from the first and the second signal vector by means of a trigonometric function, for example an inverse tangent or arctangent function.

For example, NL 1021882 C2 shows a coding unit comprising a circularly shaped sensor array coupled to an input multiplexer. The multiplexer, controlled by a control unit, forwards each of the sensor signals provided by the sensor array in temporarily discrete steps to generate a time dependent analogue signal which preferably has a sinusoidal form. A zero crossing of said analogue signal is used to determine an angular displacement of a magnetic source placed over the sensor array.

DE 19820014 A1 shows a sensor arrangement with a sensor array comprising hall sensors. An evaluation circuit processes sensor values from the hall sensors and determines the rotation angle as a function of a maximum sensor value or a transition from maximum to minimum sensor values.

GB 2 344 424 A discloses a further magnetic rotary position sensor known in the art.

As the field intensity of a magnetic source is usually not equally distributed, measuring errors in the sine and cosine vectors can occur, resulting in a deviation of the determined rotation angle compared to the actual rotation angle of the magnetic source. Further errors are introduced resulting from a lateral displacement of the magnetic source with respect to the magnetic field sensors, that means if the center of rotation of the magnetic source is displaced with respect to the center of the circular shape on which the magnetic field sensors are arranged. Therefore, an accuracy of a rotation angle determined with a conventional sensor arrangement is impaired.

It is an object of the invention to provide a sensor arrangement and a measuring method with an improved accuracy for measuring an angular displacement or an angular position of a magnetic source.

The object is achieved with the subject-matter of the independent claims.

In one embodiment of the invention, a sensor arrangement comprises a plurality of magnetic field sensors arranged along a circularly shaped circumference. Each of the magnetic field sensors is configured to provide a sensor signal corresponding to a magnetic field intensity. The sensor arrangement can be used with a rotatable diametrically magnetized magnetic source which is preferably arranged such that the center of rotation of the magnetic source is approximately coincident with the center of the circular shape. The sensor arrangement further comprises an evaluation circuit comprising a plurality of input channels. Each of the input channels is configured to receive a digital sensor value derived from a respective one of the sensor signals of the magnetic field sensors. The evaluation circuit is configured to determine a rotation angle as a function of a subset of the digital sensor values received.

In this embodiment, for each of the sensor signals provided by a respective one of the magnetic field sensors, a digital sensor value is derived, for example by means of an analog/digital converter. As the position of the respective magnetic field sensors corresponding to the digital sensor values is known, the magnetic field intensity along the circularly shaped circumference can be determined with exact, measured values at the positions of the magnetic field sensors and with calculated values, for example by means of interpolation between those positions. If the magnetic field generated by the magnetic source is also known, the rotation angle can be determined from a subset of the sensor values, wherein the subset can comprise one, two, or more sensor values from the set of sensor values received or derived respectively from the plurality of magnetic field sensors. The subset can also comprise all of the sensor values, that means a subset can be equal to the set of sensor values.

The evaluation circuit is configured to determine the rotation angle between a reference axis and an axis defined by a reference value transition derived from the subset of the digital sensor values received. The reference axis depends on the plurality of magnetic field sensors. In other words, a reference axis or zero axis is defined within the circular arrangement of the magnetic field sensors. With the digital sensor values, an axis can be determined corresponding to a reference value of the magnetic field. With respect to the diametrically magnetized magnetic source, such an axis can be usually found approximately parallel to the diameter of the magnetic source, determining the angular orientation of the magnetic source. By deriving the reference value transition corresponding to the angular orientation of the magnetic source, the rotation angle between the reference axis and the reference value transition can be determined.

In one embodiment, the evaluation circuit is configured to adjust parameters of a curve such that the curve corresponds to a series of values comprising the subset of the digital sensor values received or a set of values derived from the subset of the digital sensor values received. The rotation angle is derived from the adjusted parameters. The curve can, for example, be a sinusoidal curve or a polynomial curve.

As the shape of the magnetic field generated by the magnetic source is approximately known, a parametric function can be used which is able to approximate the known shape. The parameters of the parametric function depend on the field intensity of the magnetic field and the rotation angle of the magnetic source. In other words, the known shape of the magnetic field intensity rotates with the magnetic source. Using a parameter identification, the parameters of the parametric function can be determined or fitted such that the values of the parametric function correspond to the subset of the sensor values or to the set of values derived from the subset of the sensor values. With the parameters being determined, the rotation angle can be derived from the parameters or from the parametric curve, respectively. For example, a reference value transition can be determined from the parametric curve. Finding the parameters of the parametric curve can also be called curve fitting. The curve fitting can be performed using interpolation, linear regression, or other known parameter identification methods, usually employing a numerical approximation.

According to the invention, the subset comprises a first and a second digital sensor value. The evaluation circuit is configured to associate respective sensor positions to the plurality of magnetic field sensors and to determine a first interpolated position on a circularly shaped circumference corresponding to a reference value transition. The first interpolated position is derived as a function of the first and the second digital sensor value. The evaluation circuit is further configured to derive the rotation angle from the first interpolated position.

For example, a first digital sensor value is found that is greater than the reference value of the reference value transition. A second digital sensor value in this case is found that is smaller than the reference value. In other words, the reference value corresponding to the reference value transition can be found between the position corresponding to the sensor position of the first digital sensor value and the sensor position corresponding to the second digital sensor value, resulting in the first interpolated position. With the first interpolated position being on the circularly shaped circumference, the first position corresponds to the rotation angle. It is also possible that the first digital sensor value is smaller than the reference value and the second digital sensor value is found that is greater than the reference value.

The subset further comprises a third and a fourth digital sensor value. The evaluation circuit is configured to determine a second interpolated position corresponding to the reference value transition as a function of the third and the fourth digital sensor value and to derive the rotation angle from the first and the second interpolated position. Similar to the first position, the second interpolated position can be determined from the third and the fourth digital sensor value. Accordingly, the rotation angle can be derived from the interpolated positions. For example, the evaluation circuit is configured to determine the rotation angle as a function of a straight lined connection between the first and the second interpolated position.

The first and/or the second interpolated position can for example be determined using a numerical approximation.

In one embodiment, the first and the second digital sensor value correspond to respective adjacent magnetic field sensors. Also the third and the fourth digital sensor value can correspond to the respective adjacent magnetic field sensors.

In a further embodiment, the subset comprises a first, a second and a third digital sensor value. The evaluation circuit is configured to determine the reference value transition from the first and the second digital sensor value and to derive the rotation angle as a function of the first and the third digital sensor value or as a function of the second and the third digital sensor value. The reference value transition can, for example, be determined similar to the determination of the first position as described above. The third digital sensor value may correspond to a magnetic field sensor arranged orthogonally to the first or to the second magnetic field sensor. In other words, an angle between a magnetic field sensor corresponding to the first or the second digital sensor value and the magnetic field sensor corresponding to the third digital sensor value on the circularly shaped circumference can be a right angle.

The rotation angle can be determined as a trigonometric function of the third and the first or the second digital sensor value, for example employing an arctangent function. As the first and the second sensor value usually are relatively small values because of being near the reference value transition, errors introduced by irregularities in the magnetic field of the magnetic source are negligible. It is also possible to choose a third digital sensor value from a magnetic field sensor having a different angle to the first, or the second digital sensor value, respectively other than a right angle.

In another embodiment, the sensor arrangement comprises a first plurality of magnetic field sensors which are arranged along the circularly shaped circumference and a second plurality of magnetic field sensors which are arranged along a further circularly shaped circumference. Similarly to the magnetic field sensors of the first plurality, also the magnetic field sensors of the second plurality are configured to provide a sensor signal corresponding to a magnetic field intensity. Each of the input channels of the evaluation circuit is configured to receive a digital sensor value derived from a respective one of the sensor signals from the first and the second plurality of magnetic field sensors. The evaluation circuit is configured to determine the rotation angle depending on a curvature of a contour line of the magnetic field intensity corresponding to the reference value transition. The curvature is derived from the digital sensor values.

A contour line of the magnetic field intensity is a line on which the magnetic field intensity generated by the magnetic source is identical or has one value, respectively. The one value being a reference value, the respective contour line corresponds to the reference value transition within the magnetic field. The radiuses of the first and the second circularly shaped circumference are different. That means the magnetic field sensors of the first and the second plurality form an inner and an outer circle. Similar to the embodiments described above, positions of the reference value transition can be determined and the curvature of the contour line can be derived from the positions determined.

In an ideal case, the contour line should be a straight line. Usually, a magnetic source is not that ideal such that along a straight line deviations from a reference value occur or, in other words, a contour line corresponding to a reference value is not a straight line but comprises a curvature. The curvature can be evaluated for determining the rotation angle.

According to the invention, the evaluation circuit is configured to determine a first and a second interpolated position of the reference value transition from a first subset of the sensor values corresponding to the first plurality of magnetic field sensors and to determine a third and a fourth interpolated position of the reference value transition from a second subset of the sensor values corresponding to the second plurality of magnetic field sensors. The curvature is determined depending on the first, the second, the third and the fourth position. Numerical approximation can be also employed here.

In a further embodiment, the evaluation circuit is configured to derive a measure of the curvature and, depending on the measure derived, to determine the rotation angle further depending on further positions corresponding to a further reference value transition, the further positions determined from a further subset of the digital sensor values. A measure for the curvature can, for example, be a deviation of the positions determined of the ideal straight line. If the deviation exceeds a given threshold value, a further reference value transition corresponding to a further, different reference value can be determined using digital sensor values from the first and the second plurality of magnetic field sensors. The rotation angle may be determined from the further positions.

In an embodiment of a measuring method, a plurality of magnetic field sensors is provided which are arranged along a circularly shaped circumference. Each of the magnetic field sensors is configured to provide a sensor signal corresponding to a magnetic field intensity. A diametrically magnetized magnetic source is provided being pivoted with respect to the plurality of magnetic field sensors. Respective digital sensor values are derived from each one of the sensor signals. A rotation angle is determined as a function of a subset of the digital sensor values. For example, the magnetic source is arranged such that the center of rotation of the magnetic source is approximately identical to the center of the circularly shaped circumference.

The rotation angle is determined between a reference axis and reference value transition derived from the subset of the digital sensor values, wherein the reference axis depends on the plurality of magnetic field sensors.

The text below explains the invention in detail using exemplary embodiments with reference to the drawings, in which:
- Figure 1: is a first embodiment of a sensor arrangement,
- Figure 2: is a first exemplary diagram of a magnetic field intensity,
- Figure 3: is a second exemplary diagram of a magnetic field intensity,
- Figure 4: is a first detail of an embodiment of a sensor arrangement,
- Figure 5: is a third exemplary diagram of digital sensor values,
- Figure 6: is a fourth exemplary diagram of digital sensor values,
- Figures 7A and 7B: show vectors corresponding to the digital sensor values,
- Figure 8: is a diagram of a magnetic field intensity,
- Figure 9: shows a second detail of an embodiment of a sensor arrangement,
- Figure 10: is a fifth exemplary diagram of digital sensor values,
- Figure 11: is a third detail of an embodiment of a sensor arrangement, and
- Figure 12: is a second embodiment of a sensor arrangement.

Like reference numerals designate corresponding similar parts or elements.

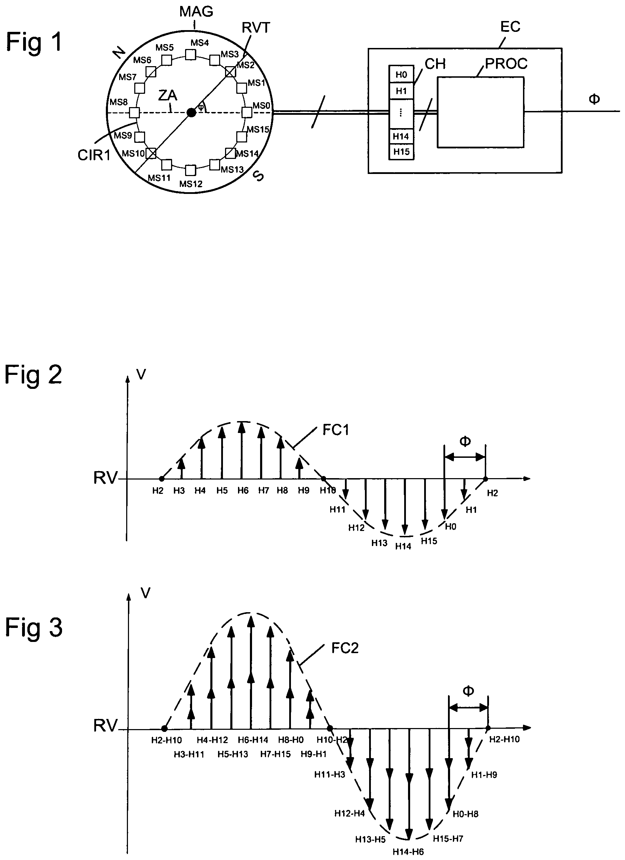

Figure 1 shows an embodiment of a sensor arrangement comprising a plurality of magnetic field sensors MS0 to MS15 which are arranged along a circularly shaped circumference CIR1. In this embodiment, a straight connection line between the magnetic field sensors MSO and MS8 forms a reference axis or zero axis ZA. The plurality of magnetic field sensors MSO to MS15 is coupled to an evaluation circuit EC comprising a plurality of input channels CH for receiving and/or deriving digital sensor values H0 to H15. The evaluation circuit comprises a processing unit PROC coupled to the plurality of input channels CH for evaluating the digital sensor values. The sensor arrangement can be used with a diametrically magnetized magnetic source MAG which comprises a magnetic orientation characterized by a reference value transition RVT which is located between a magnetic north pole N and a magnetic south pole S of the magnetic source MAG. The magnetic source MAG is usually arranged rotatably with respect to the plurality of magnetic field sensors MSO to MS15, wherein a center of rotation of the magnetic source MAG is approximately coincident with the center of the circle formed by magnetic field sensors MSO to MS15.

The reference axis ZA and the reference value transition RVT of the magnetic source MAG form an angle ϕ corresponding to an angular displacement of the magnetic source MAG. The processing unit PROC of the evaluation circuit EC determines a rotation angle Φ corresponding to the angle ϕ. For example, the angle Φ is a digital representation of the actual angle ϕ.

Figure 2 shows a signal diagram of digital sensor values H0 to H15 which, for example, are derived in an embodiment of a sensor arrangement according to Figure 1. The series of digital sensor values H0 to H15 with an amplitude V forms a sinusoidal shape in response to the magnetic field generated by the magnetic source MAG. A parametric curve FC1 is fitted to the shape of the digital sensor values H0 to H15. A mean value of the shape corresponds to a reference value RV of the reference value transition RVT. Parameters of the parametric curve FC1 are determined such that the shape of the curve FC1 and the shape of the digital sensor values H0 to H15 fit to each other. A reference value transition is found at a position corresponding to the digital sensor value H2 corresponding to the magnetic field sensor MS2 of Figure 1. As can be seen from Figure 1, a reference axis ZA is defined by the magnetic field sensor MSO or the digital sensor value H0, respectively. The angular displacement of the magnetic source MAG can be derived as the angle between the magnetic field sensor MSO and the magnetic field sensor MS2 accordingly.

It is not necessary that the reference value transition is found exactly at a position corresponding to a magnetic field sensor. It is also possible that the reference value transition is found at a position between two adjacent magnetic field sensors using interpolation and/or numerical approximation. Also a Fourier analysis of the sensor values H0 to H15 can be performed for determining the parameters of the parametric curve FC1. The rotation angle can, for example, be determined as an angle between the reference value transition RVT and the position of the magnetic field sensor corresponding to the reference axis ZA.

Figure 3 shows another signal diagram of digital sensor values. In this diagram, a sinusoidal shape is formed by a set of differential digital values resulting from the digital sensor value H0 to H15. For example, the differential values are determined from digital sensor values corresponding to opposite magnetic field sensors, that means, for example, magnetic field sensors whose straight line connection goes through the center of the circular shape.

For example, the sinusoidal shape of Figure 3 is formed by differential values H2-H10, H3-H11, H4-H12 and so on until H1-H9. Sensor signals provided by the magnetic field sensors MSO to MS15 are not only dependent on the magnetic field generated by the diametrically magnetized magnetic source MAG but also on other magnetic sources. Therefore, it is possible that all of the digital sensor values derived from the sensor signals comprise an offset resulting from that additional magnetic source. By taking differential values resulting from respective opposite magnetic field sensors, the offset can be eliminated in the resulting differential values, improving the accuracy for further evaluations.

Similar to the method described for Figure 2, a parametric curve FC2 is fitted to the series of differential values, for example by a numerical parameter identification. The rotation angle Φ is determined as an angle between the reference value transition of the fitted curve FC2 and the position corresponding to the reference axis ZA, which in this example corresponds to the position of the differential value H0-H8.

The parametric curves FC1, FC2 of figures 2 and 3 can be based on sinusoidal functions, wherein, for example, an amplitude and a phase deviation of the sinusoidal curve are determined. It is also possible to approximate the expected shape of the magnetic field intensity along the circumference SIR1 with a polynomial function, wherein the parameters of the polynomial are approximated to fit the shape of the digital sensor values H0 to H15.

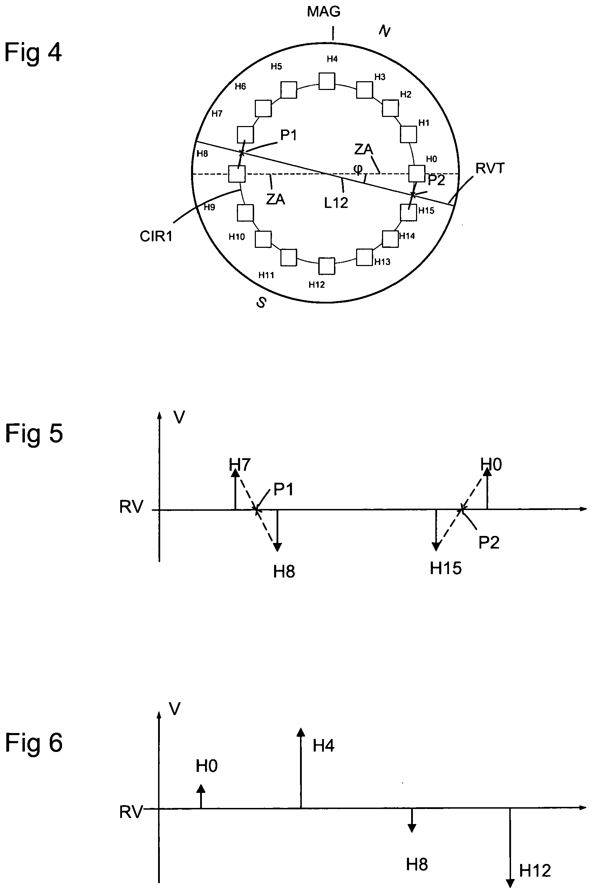

Figure 4 shows a detail of an embodiment of a sensor arrangement. In this figure, the digital sensor values H0 to H15 are located at the respective sensor positions corresponding to the respective magnetic field sensors MSO to MS15. The magnetic source MAG is rotated such that the reference value transition RVT or the respective axis is located between the digital sensor values H15 and H0 and between the digital sensor values H7 and H8, respectively, in this example.

As can be seen from Figure 5, the digital sensor value H7 is greater than the reference value RV corresponding to the reference value transition RVT. Accordingly, the digital sensor value H8 is smaller than the reference value RV. In the same way, it can be seen from Figure 5 that the digital sensor value H15 is smaller than the reference value RV and the digital sensor value H0 is greater than the reference value RV. Therefore the reference value RV can be found at a position P1 between the sensor positions corresponding to the digital sensor values H7 and H8. A further position P2 of the reference value transition can be found between the sensor positions corresponding to the digital sensor values H15 and H0. In other words, the positions P1, P2 can be interpolated from the respective known sensor positions.

With reference to Figure 4, as a coarse determination, the positions P1, P2 can be found somewhere on connections between sensor positions corresponding to values H7, H8 and between sensor positions corresponding to values H0, H15. Exact positions P1, P2 can be determined numerically in a fine determination. As the positions P1, P2 are located on the circumference CIR1, they comprise an angular component which can be used to derive the rotation angle Φ. In another embodiment, a straight line L12 between the first and the second position P1, P2 can be determined or calculated which also has an angular orientation corresponding to the rotation angle Φ.

In the arrangement shown in Figure 4, the sensor positions between which the interpolated positions P1, P2 can be found are opposite to each other, respectively. If the magnetic source MAG is located with a lateral displacement to the plurality of magnetic field sensors, it is possible that the sensor positions corresponding to the reference value transition RVT are not opposite to each other. For example, a second position P2 can also be found between the sensor positions corresponding to digital sensor values H14 and H15 if a lateral displacement is given. Nevertheless, also in this case, an angle of the straight line connection between the positions P1, P2 can be determined, corresponding to the rotation angle Φ. This method can also be regarded as a pattern detection, as both a positive-to-negative and a negative-to positive transition is determined.

According to the invention, the reference value transition RVT is determined as a function of a first and a second digital sensor value which, with reference to Figure 4, may be the values H7 and H8 or the values H15 and H0. With reference to Figure 6, a third digital sensor value H4 or H12, respectively, can be used to determine the rotation angle Φ, assumed that the reference value transition RVT is closer to the sensor position of value H0 and H8, respectively. In this example, the sensor position of value H4 is orthogonally related to the sensor position of value H0. Accordingly, the sensor position of value H12 is orthogonally related to the sensor position of value H8.

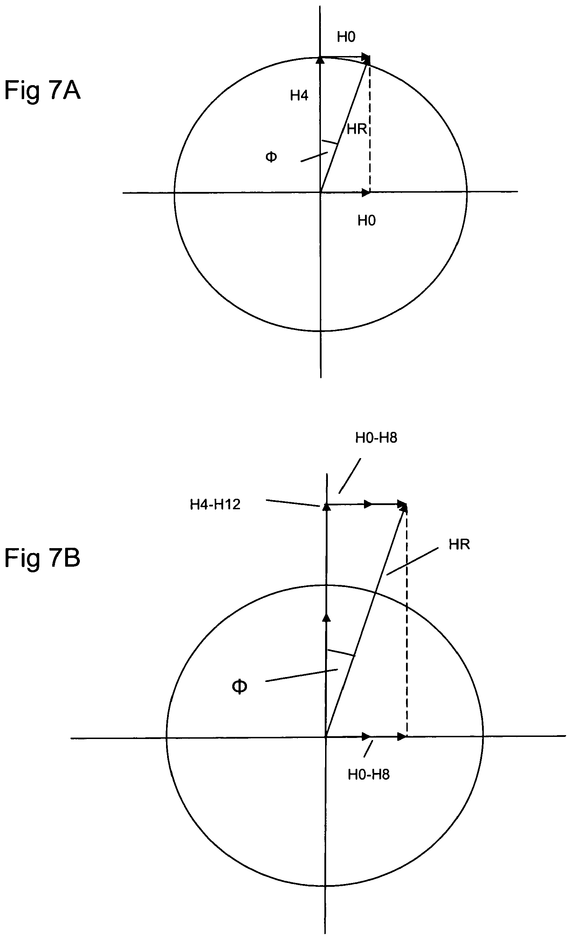

Figure 7A shows the orthogonal relation between the values H0 and H4 corresponding to their respective sensor positions. The digital sensor value H0 corresponds to a sine vector and the value H4 corresponds to a cosine vector of a resulting vector HR. The rotation angle Φ can be determined from the resulting vector HR, for example by calculating the inverse tangent or arctangent function of respective sine and cosine vectors, corresponding to the digital sensor values H4 and H0.

Similar to Figure 7A, in Figure 7B respective sine and cosine vectors of the resulting vector HR correspond to differential digital sensor values H0-H8 and H4-H12, respectively. As described for Figure 5, an offset resulting from an additional magnetic field acting on the magnetic field sensors can be compensated for. The rotation angle Φ can also be derived using a trigonometric function of the differential sine and cosine vectors.

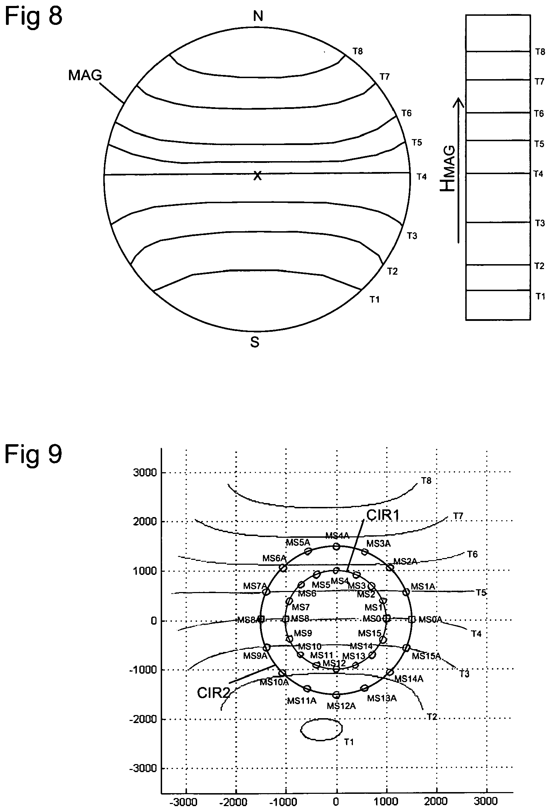

Figure 8 shows a diagram of a magnetic field intensity HMAG of a diametrically magnetized magnetic source MAG. The diagram comprises contour lines T1 to T8 with an increasing intensity of the magnetic field from T1 to T8. As can be seen from the diagram, the contour lines corresponding to a same magnetic field intensity, which can also be called an isoline, comprise a curvature, that means a deviation from an ideal straight line. In this embodiment, the contour line with the least curvature is the contour line T4 along the diameter of the magnetic source MAG.

If the center of the magnetic source MAG is laterally displaced from the center of the circular shape of the magnetic field sensors, a reference value RV corresponding to the optimum contour line T4 does not go through the center of the circular shape. Depending on the curvature, an error can be introduced when determining the rotation angle Φ.

Figure 9 shows another detail of an embodiment of a sensor arrangement. Additionally to the first plurality of magnetic field sensors MSO to MS15 arranged along the first circularly shaped circumference CIR1, a second plurality of magnetic field sensors MSOA to MS15A is provided. The magnetic field sensors MSOA to MS15A are arranged along a second circularly shaped circumference CIR2. A magnetic field intensity similar to the one shown in Figure 8 is depicted in Figure 9 to show the effect of a lateral translation of the magnetic source with respect to the magnetic field sensors MS0, MSOA to MS15, MS15A.

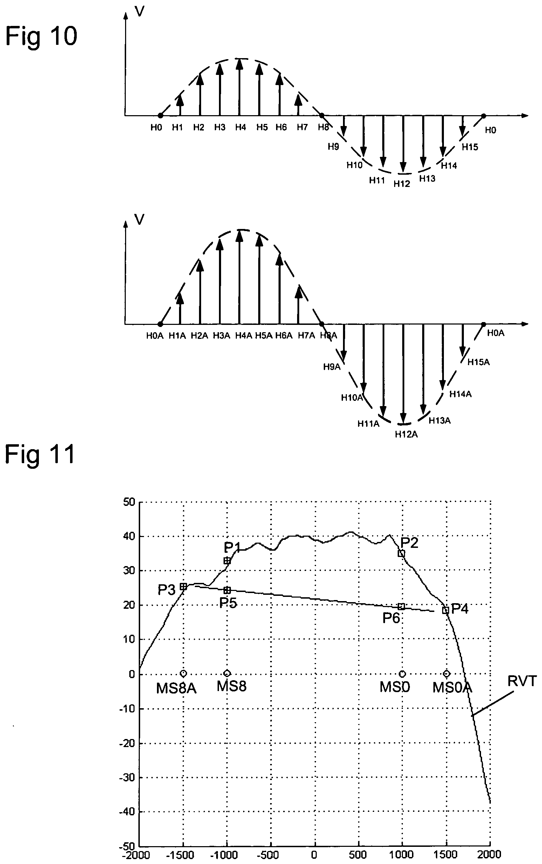

Figure 10 shows the diagram of digital sensor values H0 to H15 corresponding to the first plurality of the magnetic field sensors MSO to MS15, and a diagram of digital sensor values H0A to H15A corresponding to the second plurality of magnetic field sensors MSOA to MS15A. Both diagrams of Figure 10 form a sinusoidal shape, according to the diagram shown in Figure 2. With reference to Figure 1, the input channels CH of the evaluation circuit EC are configured to receive the digital sensor values H0, H0A to H15, H15A derived from a respective one of the sensor signals from the first and the second plurality of magnetic field sensors MS0, MSOA to MS15, MS15A. The evaluation circuit is configured to derive a curvature of a contour line corresponding to a reference value transition RVT, that means a contour line having a magnetic field intensity corresponding to a reference value RV from the digital sensor values H0, H0A to H15, H15A. Depending on the curvature, the rotation angle Φ can be determined.

Figure 11 shows a position diagram comprising the positions of the magnetic field sensors MS0, MSOA and MS8, MS8A. Furthermore, a contour line corresponding to a reference value transition RVT is shown. A first and a second interpolated position P1, P2 can be determined using the respective digital sensor values H0, H8 and H1, H7 not shown here. The determination of the positions P1, P2 can, for example, be performed in the same manner as described for Figure 5. Additionally, a third and a fourth interpolated position of the reference value transition RVT can be derived from digital sensor values of the second plurality of magnetic field sensors MSOA to MS15A, wherein the determination can also be performed according to the embodiment of Figure 5.

In an ideal case, the positions P1, P2, P3, P4 would be on a straight line. In this embodiment, from the determined interpolated positions P1 to P4, a curvature of the reference value transition RVT can be derived. For example, ideal positions P5, P6 can be determined located on the ideal straight line between positions P3 and P4, and a lateral displacement from position P1 to P5 and from position P2 to P6 can be calculated. If the calculated lateral displacement exceeds a given threshold value, determining a measure for the curvature, a further reference value transition corresponding to a further reference value can be chosen to be determined. In this case, the determination of the rotation angle Φ depends on the position and/or orientation of the further reference value transition. The method of determination of the rotation angle Φ from the further reference value transition can be the same as described for the initial reference value transition RVT or any other of the described determination methods.

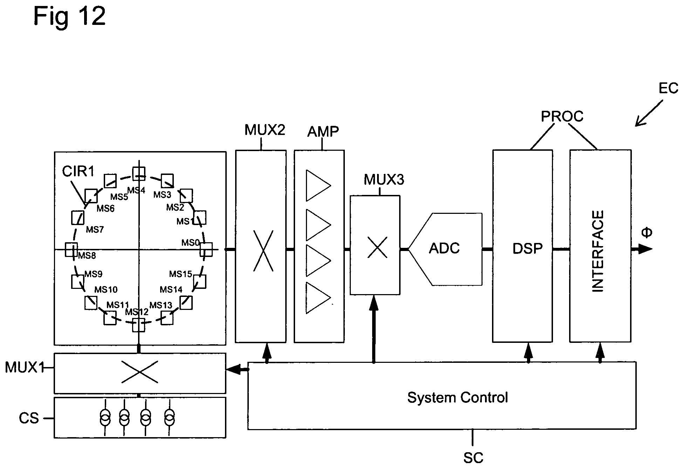

Figure 12 shows a further embodiment of a sensor arrangement comprising the plurality of magnetic field sensors MSO to MS15. The sensor arrangement comprises four current sources CS which are coupled to the magnetic field sensors MSO to MS15 via a first multiplexer MUX1. In this embodiment, the magnetic field sensors MSO to MS15 comprise Hall sensors which are provided with the current from the current sources CS for measuring the magnetic field intensity and providing an Hall voltage corresponding to the sensor signals.

Accordingly, a second multiplexer MUX2 is provided coupling the magnetic field sensors MSO to MS15 to a set of four amplifiers AMP. A third multiplexer MUX3 couples the output of the amplifiers AMP to an analog/digital converter ADC. The output of the analog/digital converter ADC is coupled to a digital signal processor DSP comprised by the processing unit PROC. The output of the digital signal processor DSP provides the rotation angle Φ via a respective interface. The multiplexers MUX1, MUX2, MUX3, the digital signal processor DSP and the interface are controlled by a system control SC.

For example, it is sufficient to evaluate only four sensor signals of respective magnetic field sensors MSO to MS15 at a time. Via the multiplexers MUX1, MUX2, four of the magnetic field sensors are selected for measuring the magnetic field intensity. The respective sensor signals are amplified by the amplifiers AMP and by means of the multiplexer MUX3 serially converted into the digital sensor values which are provided to the input channels within the digital signal processor DSP. All the determination of the reference value transition, positions and rotation angle is performed within the digital signal processor DSP. As a result, the determined rotation angle Φ is provided at an output via the interface.

Although in the embodiments described, the plurality of magnetic field sensors comprises a number of 16 magnetic field sensors, also other numbers of magnetic field sensors can be used. For example, a sensor arrangement comprises 64 magnetic field sensors. Accordingly, in the embodiments described in Figure 9 to 11, as well the first as the second plurality of magnetic field sensors each comprise 64 magnetic field sensors. It is also possible that the second plurality of magnetic field sensors comprises a different number of magnetic field sensors than the first plurality of magnetic field sensors. Hall sensors can also be used as magnetic field sensors in the embodiments of Figures 1 to 11.

### List of references

- MSO to MS15: magnetic field sensor
- MSOA to MS15A: magnetic field sensor
- H0 to H15: digital sensor value
- H0A to H15A: digital sensor value
- MAG: magnetic source
- RVT: reference value transition
- RV: reference value
- ZA: reference axis
- CIR1, CIR2: circumference
- CH: input channel
- EC: evaluation circuit
- PROC: processing unit
- ϕ, Φ: angle
- FC1, FC2: parametric curve
- P1 to P6: position
- HR: resulting vector
- HMAG: magnetic field intensity
- T1 to T8: contour line
- MUX1, MUX2, MUX3: multiplexer
- CS: current source
- AMP: amplifier
- ADC: analog/digital converter
- DSP: digital signal processor
- SC: system control

## Claims

1. A sensor arrangement to be used with a rotatable diametrically magnetized magnetic source (MAG), the sensor arrangement comprising
- a plurality of magnetic field sensors (MSO - MS15) arranged along a circularly shaped circumference (CIR1), each of the magnetic field sensors (MSO - MS15) configured to provide a sensor signal corresponding to a magnetic field intensity, wherein the center of the circumference (CIR1) is approximately coincident with the center of rotation of the magnetic source (MAG); and
- an evaluation circuit (EC) comprising a plurality of input channels, each of the input channels configured to receive a digital sensor value (H0 - H15) derived from a respective one of the sensor signals, the evaluation circuit (EC) configured to determine a rotation angle (Φ) between a reference axis (ZA) and an axis defined by a reference value transition (RVT) derived from a subset of the digital sensor values (H0 - H15) received, the reference axis (ZA) depending on the plurality of magnetic field sensors (MSO - MS15) and being defined by a straight connection line between two opposite magnetic field sensors, the reference value transition (RVT) being located between a magnetic north pole (N) and a magnetic south pole (S) of the magnetic source (MAG);
wherein the subset comprises a first, a second, a third and a fourth digital sensor value and the evaluation circuit (EC) is configured
- to associate respective sensor positions to the plurality of magnetic field sensors (MSO - MS15);
- to determine a first interpolated position (P1) on the circularly shaped circumference (CIR1) corresponding to the reference value transition (RVT) as a function of the first and the second digital sensor value;
- to determine a second interpolated position (P2) on the circularly shaped circumference (CIR1) corresponding to the reference value transition (RVT) as a function of the third and the fourth digital sensor value; and
- to derive the rotation angle (Φ) from the first and the second interpolated position (P1, P2).

2. The sensor arrangement of claim 1,wherein the first and the second digital sensor value correspond to respective adjacent magnetic field sensors and/or the third and the fourth digital sensor value correspond to respective adjacent magnetic field sensors.

3. The sensor arrangement of claim 1 or 2,
wherein the evaluation circuit (EC) is configured to determine the rotation angle (Φ) as a function of a straight-lined connection (L12) between the first and the second interpolated position (P1, P2).

4. The sensor arrangement of claim 1 or 2, wherein
- the plurality of magnetic field sensors (MSO - MS15) is referred to as a first plurality;
- the sensor arrangement comprises a second plurality of magnetic field sensors (MSOA - MS15A) which are arranged along a further circularly shaped circumference (CIR2) and configured to provide a sensor signal corresponding to a magnetic field intensity;
- each of the input channels is configured to receive a digital sensor value (H0, H0A - H15, H15A) derived from a respective one of the sensor signals from the first and the second plurality of magnetic field sensors (MSO, MSOA
- MS15, MS15A); and
- the evaluation circuit (EC) is configured to determine the rotation angle (Φ) depending on a curvature of a contour line of the magnetic field intensity corresponding to the reference value transition (RVT), the curvature derived from the digital sensor values (H0, H0A - H15, H15A);
wherein the evaluation circuit (EC) is configured
- to determine a third and a fourth interpolated position (P3, P4) of the reference value transition (RVT) from a second subset of the sensor values (HOA - H15A) corresponding to the second plurality of magnetic field sensors (MSOA - MS15A); and
- to determine the curvature depending on the first, the second, the third and the fourth position (P1, P2, P3, P4) determined.

5. The sensor arrangement of claim 4,
wherein the evaluation circuit (EC) is configured to derive a measure of the curvature and, depending on the measure derived, to determine the rotation angle (Φ) further depending on further positions corresponding to a further reference value transition, the further positions determined from a further subset of the digital sensor values (H0, H0A - H15, H15A).

6. The sensor arrangement of one of claims 1 to 5,
wherein at least one of the plurality of magnetic field sensors (MSO, MSOA - MS15, MS15A) comprises a Hall sensor.

7. A measuring method, comprising
- providing a plurality of magnetic field sensors (MSO - MS15) arranged along a circularly shaped circumference (CIR1), each of the magnetic field sensors (MSO - MS15) configured to provide a sensor signal corresponding to a magnetic field intensity, wherein the center of the circumference (CIR1) is approximately coincident with the center of rotation of the magnetic source (MAG);
- providing a diametrically magnetized magnetic source (MAG) pivoted with respect to the plurality of magnetic field sensors (MSO - MS15);
- deriving respective digital sensor values (H0 - H15) from each one of the sensor signals; and
- determining a rotation angle (Φ) between a reference axis (ZA) and an axis defined by a reference value transition (RVT) derived from a subset of the digital sensor values (H0 - H15), the reference axis (ZA) depending on the plurality of magnetic field sensors (MSO - MS15) and being defined by a straight connection line between two opposite magnetic field sensors, the reference value transition (RVT) being located between a magnetic north pole (N) and a magnetic south pole (S) of the magnetic source (MAG);
wherein the subset comprises a first, a second, a third and a fourth digital sensor value and determining the rotation angle (Φ) comprises
- associating respective sensor positions to the plurality of magnetic field sensors (MSO - MS15);
- determining a first interpolated position (P1) on the circularly shaped circumference (CIR1) corresponding to the reference value transition (RVT) as a function of the first and the second digital sensor value;
- determining a second interpolated position (P2) on the circularly shaped circumference (CIR1) corresponding to the reference value transition (RVT) as a function of the third and the fourth digital sensor value; and
- deriving the rotation angle (Φ) from the first and the second interpolated position (P1, P2).

## Patentansprüche

1. Sensoranordnung zur Verwendung mit einer drehbaren, diametrisch magnetisierten Magnetquelle (MAG), wobei die Sensoranordnung umfasst:
- eine Vielzahl von Magnetfeldsensoren (MSO - MS15), die entlang eines kreisrund geformten Umfangs (CIR1) angeordnet sind, wobei jeder der Magnetfeldsensoren (MSO - MS15) dazu ausgelegt ist, ein Sensorsignal bereitzustellen, das einer Magnetfeldstärke entspricht, wobei die Mitte des Umfangs (CIR1) in etwa der Drehmitte der Magnetquelle (MAG) entspricht; und
- eine Auswertungsschaltung (EC), die eine Vielzahl von Eingangskanälen umfasst, wobei jeder der Eingangskanäle dazu ausgelegt ist, einen digitalen Sensorwert (H0 - H15) zu empfangen, der aus einem jeweiligen der Sensorsignale abgeleitet ist, wobei die Auswertungsschaltung (EC) dazu ausgelegt ist, einen Drehwinkel (Φ) zwischen einer Referenzachse (ZA) und einer Achse zu bestimmen, die durch einen Referenzwertübergang (RVT) definiert ist, der aus einem Teilsatz der empfangenen digitalen Sensorwerte (H0 - H15) abgeleitet ist, wobei die Referenzachse (ZA) von der Vielzahl von Magnetfeldsensoren (MSO - MS15) abhängt und durch eine gerade Verbindungslinie zwischen zwei entgegengesetzten Magnetfeldsensoren definiert ist, wobei der Referenzwertübergang (RVT) sich zwischen einem magnetischen Nordpol (N) und einem magnetischen Südpol (S) der Magnetquelle (MAG) befindet;
wobei der Teilsatz einen ersten, einen zweiten, einen dritten und einen vierten digitalen Sensorwert umfasst und die Auswertungsschaltung (EC) dazu ausgelegt ist,
- der Vielzahl von Magnetfeldsensoren (MSO - MS15) jeweilige Sensorpositionen zuzuordnen;
- eine erste interpolierte Position (P1) auf dem kreisrund geformten Umfang (CIR1), die dem Referenzwertübergang (RVT) entspricht, in Abhängigkeit vom ersten und zweiten digitalen Sensorwert zu bestimmen;
- eine zweite interpolierte Position (P2) auf dem kreisrund geformten Umfang (CIR1), die dem Referenzwertübergang (RVT) entspricht, in Abhängigkeit vom dritten und vierten digitalen Sensorwert zu bestimmen; und
- den Drehwinkel (φ) aus der ersten und der zweiten interpolierten Position (P1, P2) abzuleiten.

2. Sensoranordnung nach Anspruch 1, wobei der erste und der zweite digitale Sensorwert jeweiligen benachbarten Magnetfeldsensoren entsprechen und/oder der dritte und der vierte digitale Sensorwert jeweiligen benachbarten Magnetfeldsensoren entsprechen.

3. Sensoranordnung nach Anspruch 1 oder 2,
wobei die Auswertungsschaltung (EC) dazu ausgelegt ist, den Drehwinkel (φ) in Abhängigkeit von einer geradlinigen Verbindung (L12) zwischen der ersten und zweiten interpolierten Position (P1, P2) zu bestimmen.

4. Sensoranordnung nach Anspruch 1 oder 2, wobei
- die Vielzahl von Magnetfeldsensoren (MSO - MS15) als erste Vielzahl bezeichnet ist;
- die Sensoranordnung eine zweite Vielzahl von Magnetfeldsensoren (MSOA - MS15A) umfasst, die entlang eines weiteren kreisrund geformten Umfangs (CIR2) angeordnet und dazu ausgelegt sind, ein Sensorsignal bereitzustellen, das einer Magnetfeldstärke entspricht;
- jeder der Eingangskanäle dazu ausgelegt ist, einen digitalen Sensorwert (H0, H0A - H15, H15A) zu empfangen, der aus einem jeweiligen der Sensorsignale aus der ersten und der zweiten Vielzahl von Magnetfeldsensoren (MSO, MSOA - MS15, MS15A) abgeleitet ist; und
- die Auswertungsschaltung (EC) dazu ausgelegt ist, den Drehwinkel (φ) in Abhängigkeit von einer Krümmung einer Umrisslinie der Magnetfeldstärke entsprechend dem Referenzwertübergang (RVT) zu bestimmen, wobei die Krümmung aus den digitalen Sensorwerten (H0, H0A - H15, H15A) abgeleitet ist;
wobei die Auswertungsschaltung (EC) dazu ausgelegt ist,
- eine dritte und eine vierte interpolierte Position (P3, P4) des Referenzwertübergangs (RVT) aus einem zweiten Teilsatz der Sensorwerte (HOA - H15A) zu bestimmen, die der zweiten Vielzahl von Magnetfeldsensoren (MSOA - MS15A) entsprechen; und
- die Krümmung in Abhängigkeit von der bestimmten ersten, zweiten, dritten und vierten Position (P1, P2, P3, P4) zu bestimmen.

5. Sensoranordnung nach Anspruch 4,
wobei die Auswertungsschaltung (EC) dazu ausgelegt ist, ein Maß der Krümmung abzuleiten und in Abhängigkeit von dem abgeleiteten Maß den Drehwinkel (φ) weiter in Abhängigkeit von weitere Positionen zu bestimmen, die einem weiteren Referenzwertübergang entsprechen, wobei die weiteren Positionen aus einem weiteren Teilsatz der digitalen Sensorwerte (H0, H0A - H15, H15A) bestimmt sind.

6. Sensoranordnung nach einem der Ansprüche 1 bis 5, wobei mindestens einer der Vielzahl von Magnetfeldsensoren (MSO, MSOA - MS15, MS15A) einen Hall-Sensor umfasst.

7. Messverfahren, umfassend:
- Bereitstellen einer Vielzahl von Magnetfeldsensoren (MSO - MS15), die entlang eines kreisrund geformten Umfangs (CIR1) angeordnet sind, wobei jeder der Magnetfeldsensoren (MSO - MS15) dazu ausgelegt ist, ein Sensorsignal bereitzustellen, das einer Magnetfeldstärke entspricht, wobei die Mitte des Umfangs (CIR1) in etwa der Drehmitte der Magnetquelle (MAG) entspricht;
- Bereitstellen einer diametrisch magnetisierten Magnetquelle (MAG), die in Bezug auf die Vielzahl von Magnetfeldsensoren (MSO - MS15) verschwenkt wird;
- Ableiten jeweiliger digitaler Sensorwerte (H0 - H15) aus jedem der Sensorsignale; und
- Bestimmen eines Drehwinkels (φ) zwischen einer Referenzachse (ZA) und einer Achse, die durch einen Referenzwertübergang (RVT) definiert ist, der aus einem Teilsatz der digitalen Sensorwerte (H0 - H15) abgeleitet ist, wobei die Referenzachse (ZA) von der Vielzahl von Magnetfeldsensoren (MSO - MS15) abhängt und durch eine gerade Verbindungslinie zwischen zwei entgegengesetzten Magnetfeldsensoren definiert ist, wobei der Referenzwertübergang (RVT) sich zwischen einem magnetischen Nordpol (N) und einem magnetischen Südpol (S) der Magnetquelle (MAG) befindet;
wobei der Teilsatz einen ersten, einen zweiten, einen dritten und einen vierten digitalen Sensorwert umfasst und das Bestimmen des Drehwinkels (φ) umfasst,
- der Vielzahl von Magnetfeldsensoren (MSO - MS15) jeweilige Sensorpositionen zuzuordnen;
- eine erste interpolierte Position (P1) auf dem kreisrund geformten Umfang (CIR1), die dem Referenzwertübergang (RVT) entspricht, in Abhängigkeit vom ersten und zweiten digitalen Sensorwert zu bestimmen;
- eine zweite interpolierte Position (P2) auf dem kreisrund geformten Umfang (CIR1), die dem Referenzwertübergang (RVT) entspricht, in Abhängigkeit vom dritten und vierten digitalen Sensorwert zu bestimmen; und
- den Drehwinkel (φ) aus der ersten und der zweiten interpolierten Position (P1, P2) abzuleiten.

## Revendications

1. Agencement de capteurs destiné à être utilisé avec une source magnétique rotative magnétisée diamétralement (MAG), l'agencement de capteurs comprenant
- une pluralité de capteurs de champ magnétique (MSO - MS15) agencés le long d'une circonférence (CIR1) de forme circulaire, chacun des capteurs de champ magnétique (MSO - MS15) étant configuré pour fournir un signal de capteur correspondant à une intensité de champ magnétique, sachant que le centre de la circonférence (CIR1) coïncide approximativement avec le centre de rotation de la source magnétique (MAG) ; et
- un circuit d'évaluation (EC) comprenant une pluralité de canaux d'entrée, chacun des canaux d'entrée étant configuré pour recevoir une valeur de capteur numérique (H0 - H15) dérivée d'un signal de capteur respectif parmi les signaux de capteur, le circuit d'évaluation (EC) étant configuré pour déterminer un angle de rotation (φ) entre un axe de référence (ZA) et un axe défini par une transition de valeur de référence (RVT) dérivée d'un sous-ensemble des valeurs de capteur numériques (H0 - H15) reçues, l'axe de référence (ZA) dépendant de la pluralité de capteurs de champ magnétique (MSO - MS15) et étant défini par une ligne de connexion droite entre deux capteurs de champ magnétique opposés, la transition de valeur de référence (RVT) étant située entre un pôle nord magnétique (N) et un pôle sud magnétique (S) de la source magnétique (MAG) ; sachant que le sous-ensemble comprend une première, une deuxième, une troisième et une quatrième valeur de capteur numérique et le circuit d'évaluation (EC) est configuré
- pour associer des positions de capteur respectives à la pluralité de capteurs de champ magnétique (MSO - MS15) ;
- pour déterminer une première position interpolée (P1) sur la circonférence (CIR1) de forme circulaire correspondant à la transition de valeur de référence (RVT) en fonction de la première et de la deuxième valeur de capteur numérique ;
- pour déterminer une deuxième position interpolée (P2) sur la circonférence (CIR1) de forme circulaire correspondant à la transition de valeur de référence (RVT) en fonction de la troisième et de la quatrième valeur de capteur numérique ; et
- pour dériver l'angle de rotation (φ) de la première et de la deuxième position interpolée (P1, P2).

2. L'agencement de capteurs de la revendication 1, sachant que la première et la deuxième valeur de capteur numérique correspondent à des capteurs de champ magnétique adjacents respectifs et/ou la troisième et la quatrième valeur de capteur numérique correspondent à des capteurs de champ magnétique adjacents respectifs.

3. L'agencement de capteurs de la revendication 1 ou 2,
sachant que le circuit d'évaluation (EC) est configuré pour déterminer l'angle de rotation (φ) en fonction d'une connexion en ligne droite (L12) entre la première et la deuxième position interpolée (P1, P2).

4. L'agencement de capteurs de la revendication 1 ou 2, sachant que
- la pluralité de capteurs de champ magnétique (MSO - MS15) est désignée comme première pluralité ;
- l'agencement de capteurs comprend une deuxième pluralité de capteurs de champ magnétique (MSOA - MS15A) qui sont agencés le long d'une circonférence (CIR2) de forme circulaire supplémentaire et configurés pour fournir un signal de capteur correspondant à une intensité de champ magnétique ;
- chacun des canaux d'entrée est configuré pour recevoir une valeur de capteur numérique (H0, H0A - H15, H15A) dérivée d'un signal de capteur respectif parmi les signaux de capteur provenant de la première et de la deuxième pluralité de capteurs de champ magnétique (MSO, MSOA - MS15, MS15A) ; et
- le circuit d'évaluation (EC) est configuré pour déterminer l'angle de rotation (φ) en fonction d'une courbure d'une ligne de contour de l'intensité de champ magnétique correspondant à la transition de valeur de référence (RVT), la courbure étant dérivée des valeurs de capteur numériques (H0, H0A - H15, H15A) ;
sachant que le circuit d'évaluation (EC) est configuré
- pour déterminer une troisième et une quatrième position interpolée (P3, P4) de la transition de valeur de référence (RVT) à partir d'un deuxième sous-ensemble de valeurs de capteur (HOA - H15A) correspondant à la deuxième pluralité de capteurs de champ magnétique (MSOA - MS15A) ; et
- pour déterminer la courbure en fonction de la première, de la deuxième, de la troisième et de la quatrième position (P1, P2, P3, P4) déterminée.

5. L'agencement de capteurs de la revendication 4,
sachant que le circuit d'évaluation (EC) est configuré pour dériver une mesure de la courbure et, en fonction de la mesure dérivée, pour déterminer l'angle de rotation (φ) en outre en fonction de positions supplémentaires correspondant à une transition de valeur de référence supplémentaire, les positions supplémentaires étant déterminées à partir d'un sous-ensemble supplémentaire des valeurs de capteur numériques (H0, H0A - H15, H15A).

6. L'agencement de capteurs de l'une des revendications 1 à 5,
sachant qu'au moins un de la pluralité de capteurs de champ magnétique (MSO, MSOA - MS15, MS15A) comprend un capteur de Hall.

7. Procédé de mesure, comprenant
- la mise à disposition d'une pluralité de capteurs de champ magnétique (MSO - MS15) agencés le long d'une circonférence (CIR1) de forme circulaire, chacun des capteurs de champ magnétique (MSO - MS15) étant configuré pour fournir un signal de capteur correspondant à une intensité de champ magnétique, sachant que le centre de la circonférence (CIR1) coïncide approximativement avec le centre de rotation de la source magnétique (MAG) ;
- la mise à disposition d'une source magnétique magnétisée diamétralement (MAG) pivotée par rapport à la pluralité de capteurs de champ magnétique (MSO - MS15) ;
- la dérivation de valeurs de capteur numériques (H0 - H15) respectives de chacun des signaux de capteur ; et
- la détermination d'un angle de rotation (φ) entre un axe de référence (ZA) et un axe défini par une transition de valeur de référence (RVT) dérivée d'un sous-ensemble des valeurs de capteur numériques (H0 - H15), l'axe de référence (ZA) dépendant de la pluralité de capteurs de champ magnétique (MSO - MS15) et étant défini par une ligne de connexion droite entre deux capteurs de champ magnétique opposés, la transition de valeur de référence (RVT) étant située entre un pôle nord magnétique (N) et un pôle sud magnétique (S) de la source magnétique (MAG) ;
sachant que le sous-ensemble comprend une première, une deuxième, une troisième et une quatrième valeur de capteur numérique et la détermination de l'angle de rotation (φ) comprend
- l'association de positions de capteur respectives à la pluralité de capteurs de champ magnétique (MSO - MS15) ;
- la détermination d'une première position interpolée (P1) sur la circonférence (CIR1) de forme circulaire correspondant à la transition de valeur de référence (RVT) en fonction de la première et de la deuxième valeur de capteur numérique ;
- la détermination d'une deuxième position interpolée (P2) sur la circonférence (CIR1) de forme circulaire correspondant à la transition de valeur de référence (RVT) en fonction de la troisième et de la quatrième valeur de capteur numérique ; et
- la dérivation de l'angle de rotation (φ) de la première et de la deuxième position interpolée (P1, P2).
